# EUROPÄISCHE PATENTSCHRIFT

(11) **EP 0 530 521 B1**
(45) Veröffentlichungstag und Bekanntmachung des Hinweises auf die Patenterteilung: **15.11.1995**
(21) Anmeldenummer: 92113318.7
(22) Anmeldetag: 05.08.1992
(51) Int. Cl.: H02G 5/00

(54) **Stütz- und Haltevorrichtung für Stromschienen in Schienenverteilern**
Support device for bus bars in current distributors
Dispositif de support pour barres omnibus dans des répartiteurs

(30) Priorität: 22.08.1991 DE 9110388 U
(43) Veröffentlichungstag der Anmeldung: 10.03.1993
(73) Patentinhaber: Klöckner-Moeller GmbH, 53115 Bonn (DE)
(72) Erfinder: Ammann, Eckhard, W-5206 Seelscheid (DE); von Hasselt, Georg, W-5441 Ettringen (DE); Siegried, Pollauf, W-5042 Erfstadt (DE)

(56) Entgegenhaltungen:
- DE-A- 717 106
- DE-B- 1 490 414
- DE-U- 8 224 673
- US-A- 4 008 366

## Beschreibung

Die Erfindung betrifft eine Stütz- und Haltevorrichtung nach dem Oberbegriff des Anspruches 1.

In der Energieverteilung sind Stromschienensysteme zum Transport und zur Verteilung elektrischer Energie seit langem bekannt und bewährt.

Typische Aufgaben dieser Schienensysteme sind beispielsweise die Verbindung von einem Transformator über einen Hauptverteiler zum Unterverteiler, die Versorgung von Hochhausetagen oder die Versorgung von Großverbrauchern.

Die Stromschienen sind vorwiegend als Flachschienen ausgeführt und liegen meistens auf Abstand parallel nebeneinander.

Die Stromschienen sind mit Stütz- und Haltelementen versehen, die die Stromschienen in einem Gehäuse und auf Abstand halten.

Eine Stütz- und Haltevorrichtung, die in der WO 86/01945 gezeigt ist, besteht aus zwei gegenüberliegenden Trägerhälften. Diese Trägerhälften enthalten jeweils Aussparungen, in der die Stromschienen gehalten sind, wie insbesondere in der Fig. 9 zu sehen ist, wobei die Aussparungen bis etwa zur Hälfte der Schienenbreite ausgebildet sind.

Die Stromschienen sind mit Isolierumhüllungen versehen, die durch ihre elastische Wirkung die Schienenhalterung unterstützen.

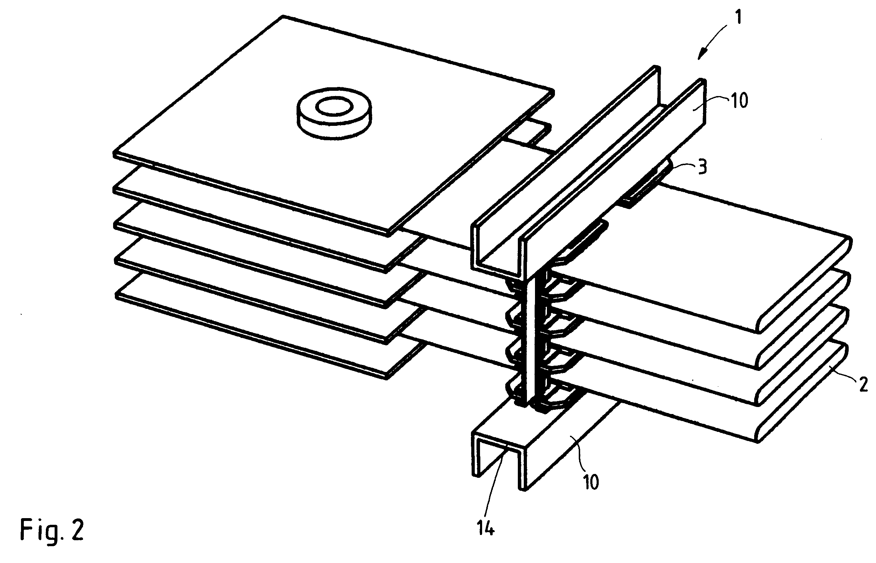

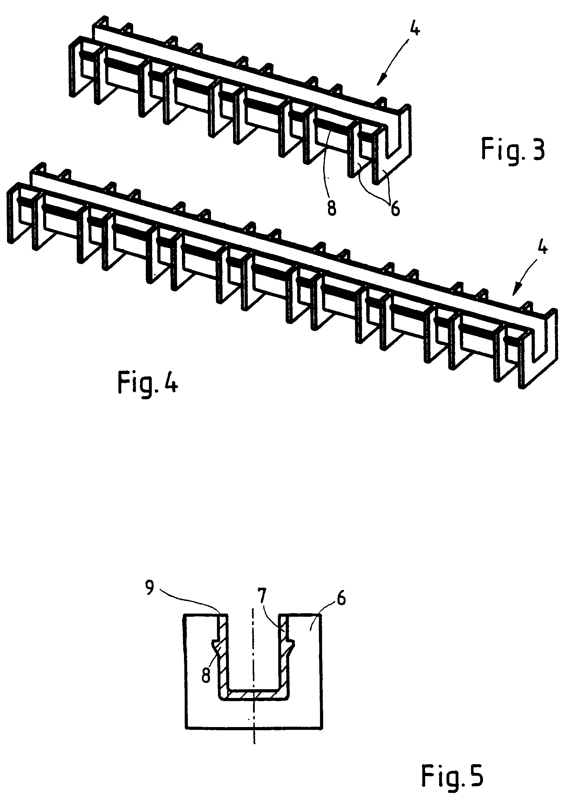

In der DE-AS 1 187 291 ist ein Sammelschienenkanal mit durch Isolierumhüllungen geschützten Stromschienen, insbesondere in den Figuren 2 und 3, gezeigt.

Wie in der DE-AS 1 168 525 gezeigt und beschrieben ist, sind diese Stromschienen, ähnlich wie in der oben erläuterten WO 86/11945, zwischen zwei gegenüberliegenden Isolatoren eingeklemmt.

Nachteilig bei den durch eine PVC-Umhüllung isolierten Stromschienen ist, daß zum einen die höchstzulässige Temperatur der Stromschienen durch die Isolierung begrenzt ist, zum anderen, daß derartige Isolierungen teuer sind.

Es sind zwar Sammelschienensysteme ohne derartige Isolierungen bekannt, wie in der DE-OS 32 38 483 gezeigt, bei der ein Halteteil und ein Abdeckteil kammartig ineinandergreifen und die Stromschienen dadurch labyrinthartig elektrisch isoliert sind oder, wie in der DE-OS 38 27 683 gezeigt, bei der die Stromschienen in Kammern eingebettet sind. Eine Verwendung für Hochstromschienensysteme scheidet aufgrund der hohen Kurzschlußkräfte und des hohen Isolieraufwandes aus.

Es ist auch bekannt, stromführende Teile mit einer hochwärmebeständigen Beschichtung aus einem duroplastischen lösungsmittelfreien Isolierstoff, z.B. Epoxidharz, nach VDE 0355 zu versehen, wobei die Beschichtung als Isolierung dient. Die hierdurch beschichteten Stromschienen sind höher belastbar und preiswerter als die mit hochwärmebeständigen PVC-Isolierungen umhüllten Stromschienen.

Die Stromschienen und Isolationselemente der Haltevorrichtungen unterliegen aber Fertigungstoleranzen und können eine unterschiedliche Beschichtung aufweisen.
Es kommen die unterschiedlichen Ausdehnungskoeffizienten der Stromschienen und Stütz- und Isoliermittel hinzu.

Durch das Fehlen der elastischen Umhüllung können diese Fertigungstoleranzen und Abweichungen nicht kompensiert werden.

Die oben erläuterten Stüz- und Haltevorrichtungen sind für die Verwendung von mit Duroplasten beschichteten Stromschienen wegen der geforderten hohen Kurzschlußfestigkeit und der oben erläuterten Nachteile deshalb nicht geeignet.

Aus der DE-AS 14 90 414 ist ein Schienenträger für Hochstromanlagen bekannt geworden mit verschiebbaren Isolierprofilen. Für diesen Schienenträger sind zahlreiche Isolierende Teile erfolderlich mit einigem Materialaufwand, was sich im Brandfalle als ungünstig erweist (Brandlast). Weiterhin ist die Montage umständlich.

Aufgabe der Erfindung ist es deshalb, eine Stütz- und Haltevorrichtung mit geringer Brandlast nach dem Oberbegriff des Anspruches 1 zu schaffen, die Montagefreundlich ist und auch für die Verwendung von mit Duroplasten beschichteten Stromschienen geeignet ist.

Die Aufgabe der Erfindung wird durch die kennzeichnenden Merkmale des Anspruches 1 gelöst, während in den Ansprüchen 2 bis 8 besonders vorteilhafte Weiterbildungen der Erfindung gekennzeichnet sind.

Durch die Erfindung ist sichergestellt, daß auch durch Duroplaste isolierte Stromschienen in dem Schienenkanal sicher gestützt und gehalten sind, indem Stützelemente vor der Montage in einem Isolierprofil verschiebbar geführt sind und anschließend zwischen den Stromschienen eingeklemmt werden. Hierdurch passen sich die Stützelemente automatisch den Toleranzen an.

Eine besonders hohe Kurzschlußfestigkeit, die erst eine sichere Verwendung auch im Hochstrombereich zuläßt, wird durch das Merkmal des Anspruches 2 erreicht.

Während eine weitere Vereinfachung der Montage erreicht wird, indem ein Einschieben der Stützelemente in die Lücken zwischen den Stromschienen durch eine Drehbewegung um das Befestigungselement möglich wird, ergibt sich weiterhin eine besonders montagefreundliche Ausgestaltung der Stützelemente selber.

Durch die U-Form des Isolierprofils können also die U-Profile und die Befestigungselemente mit den Gegenhalterungen, die für die Klemmung vorgesehen sind, vormontiert werden. Die Isolierprofile können anschließend eingefügt werden.

Von besonderem Vorteil ist es, das Bewegungsspiel der Stützelemente durch Kragen, gemäß des Kennzeichens des Anspruches 4, zu begrenzen. Hierdurch wird zusätzlich einen Vergrößerung der Kriechstrecke erreicht.

Wird einerseits durch die Merkmale des Anspruches 5 eine wirksame Isolierung erreicht, so ergibt sich andererseits eine sichere Befestigung der Stützelemente. Letzteres ist besonders günstig, wenn das Befestigungselement in dem Isolierprofil bündig eingebettet ist, weil dadurch eine Rückfederung der Seitenschenkel des Isolierprofils nicht möglich ist und damit ein Ausrasten des Stützelementes verhindert wird.

Eine einfache Anpassung an unterschiedliche Schienenqueschnitte wird durch das charakteristische Merkmal des Anspruches 7 bewirkt.

Durch das Einsetzen von Keramik als Werkstoff für die Stützelemente ergibt sich zum einen eine erhebliche Reduzierung der Brandlast im Vergleich zu den aus einem Thermo- oder Duroplast hergestellten Stütz- und Haltevorrichtungen, zum anderen ist dieses Material umweltverträglich und leicht wiederverwertbar.

Das Einsetzen von Keramik ist nur möglich, weil hier keine Biegebeanspruchungen auftreten im Gegensatz zu den bekannten Vorrichtungen, sondern nur Druckbeanspruchungen auftreten.

Es sei noch vermerkt, daß selbst bei der Verwendung von Kunststoff für die Stützelemente eine Reduzierung der Brandlast im Vergleich zum Stand der Technik eintritt.

Anhand der Zeichnung, in der ein Ausführungsbeispiel dargestellt ist, sollen die Erfindung, weitere Ausgestaltungen und Verbesserungen der Erfindung und weitere Vorteile näher beschrieben und erläutert werden.

Es zeigt:
- Fig. 1: eine auseinandergezogene Darstellung der erfindungsgemäßen Vorrichtung,
- Fig. 2: eine Darstellung von der in Fig. 1 dargestellten Vorrichtung im zusammengesetzten Zustand,
- Fig. 3: eine Darstellung eines Isolierprofils,
- Fig. 4: eine Darstellung eines weiteren Isolierprofils und
- Fig. 5: eine Schnittdarstellung des Isolierprofils.

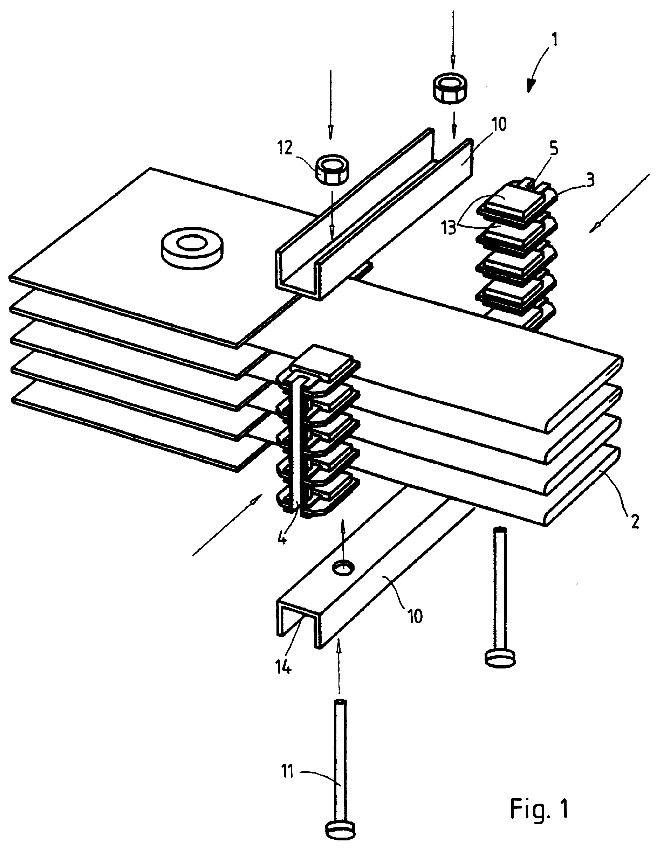

Die in Fig.1 gezeigte Stütz- und Haltevorrichtung 1 dient in diesem Ausführungsbeispiel zur Stützung von vier Flachschienen die an ihren Flachseiten parallel nebeneinander und im Abstand angeordnet sind, wobei nur die unterste Stromschiene mit der Bezugsziffer 2 versehen ist.

Die Stromschienen 2 weisen keine PVC-Isolierumhüllung, die üblicherweise eingesetzt wird, sondern eine aus einer Duroplastbeschichtung nach VDE 0355 bestehenden Isolierumhüllung auf.

Zwischen den Stromschienen 2 sind zwei isolierende Stützelemente 3 angeordnet, die jeweils einem im wesentlichen U-förmigen Isolierprofil 4 zugeordnet sind, von denen aber nur einer in der Fig.1 dargestellt ist.

Die Stützelemente sind mit Aussparungen 5 versehen, die eine U-förmige, dem Isolierprofil 4 angepaßte Form aufweisen und auf dieses aufgerastet sind.

Die Rastung kann durch nicht dargestellte Raststege erfolgen, die in den Stützelementen 3 ausgebildet sind, und die mit an das Isolierprofil angeformten Rastnasen 8 korrespondieren.

Die Raststege können aber auch derart ausgebildet sein, daß sie mit den Kanten 9 des U-förmigen Abschnittes 7 korrespondieren.

Die Stützelemente 3 sind in dem Isolierprofil 4 verschiebbar geführt und durch mit dem U-förmigen Abschnitt 7 des Isolierprofils 4 einstückig verbundenen Kragen, die in der Fig.3 und Fig.5 mit der Bezugsziffer 6 versehen sind, in ihrem Bewegungsspiel begrenzt.
Der Abstand von zwei einem Stützelement 3 zugeordneten Kragen 6 ist deutlich größer als die Dicke der Stützelemente 3.

Die Kragen 6 weisen eine U-förmige Form auf. Diese dienen zusätzlich der Verlängerung der Kriechstrecke zwischen den Stromschienen.

Durch dieses Bewegungsspiel passen sich die Stützelemente 3 den unterschiedlichen Schienenhöhen, die durch Fertigungstoleranzen und durch die unterschiedliche Stärke der Beschichtung entstehen können, an.

Die Stützelemente 3 werden mit den dazwischen liegenden Stromschienen 2 mittels zweier U-Profile 10 aus Metall eingeklemmt, die sich mit ihren Querschenkeln 14 gegenüberliegen, wie in der Fig.2 dargestellt ist, und die mit zwei Befestigungselementen 11 und zwei Gegenhalterungen 12 zusammenwirken, die in der Fig.1 mit Bezugsziffern versehen sind. Diese können Schrauben und Muttern sein.

Die Stütz- und Haltevorrichtung 1 wird in folgender Weise montiert.
Die einzelnen Stützelemente 3 werden auf jeweils einem Isolierprofil 4 aufgerastet, welches der jeweiligen Schienenanzahl angepaßt ist, wie aus den in den Figuren 3 und 4 gezeigten Isolierprofile 4 zu erkennen ist.
Anschließend werden die Stützelemente jeweils von einer Seite zwischen die Lücken der Stromschienen eingeschoben.

Es entsteht ein Paket von Stützelementen 3 und Stromschienen 2, das durch die U-Profile 10 und die Befestigungselemente 11 eingeklemmt wird, wobei das Paket mit Stützelementen 3 abgeschlossen ist.

Die Befestigungselemente 11 sind innerhalb des Isolierprofils 4 durchgeführt und durch dieses isoliert.

Die Stützelemente 3 weisen hochgezogene Stützbereiche 13 auf, wie in der Fig.1 zu sehen ist, die den Abstand zwischen den Stromschienen 2 bestimmen.

Alle Stützelemente 3 können gleich ausgeführt sein und benötigen durch ihr kleines Volumen relativ wenig Werkstoff.

Dies ermöglicht eine preiswerte Herstellung.

Das Befestigungselement 11 ist in dem Isolierprofil 4 bündig eingebettet, derart daß eine Rückfederung der Seitenschenkel des Isolierprofils 4 nicht möglich ist und daß damit ein Ausrasten der Stützelemente verhindert wird.

## Patentansprüche

1. Stütz- und Haltevorrichtung (1) für Stromschienen (2) in Schienenverteilern mit auf Abstand parallel angeordneten Flachschienen, wobei Stützelemente (3) zwischen den Stromschienen (2) eingeklemmt sind und die Stützelemente (3) von mindestens einem Isolierprofil (4) gehalten und in diesem (4) verschiebbar geführt sind, **dadurch gekennzeichnet**, daß zwischen den Stromschienen (2) und am Anfang und am Ende des Paketes aus Stromschienen (2) und Stützelementen (3) zwei Stützelemente (3) vorhanden sind, die jeweils einem Isolierprofil (4) zugeordnet sind, daß das Isolierprofil (4) im wesentlichen U-förmig ist und daß die Stützelemente (3) eine dem Isolierprofil (4) angepaßte Aussparung (5) aufweisen und auf dieses aufgerastet sind.

2. Stütz- und Haltevorrichtung nach Anspruch 1, dadurch gekennzeichnet, daß das Paket aus Stromschienen (2) und Stützelementen (3) mittels zweier U-Profile (10) mit Befestigungselementen (11) und Gegenhalterungen (12) eingeklemmt wird.

3. Stütz- und Haltevorrichtung nach Anspruch 1 oder 2, dadurch gekennzeichnet, daß die Stütz- und Haltevorrichtung (1) für die Halterung von mit einem Duroplast beschichteten Stromschienen (2) bestimmt ist.

4. Stütz- und Haltevorrichtung nach einem der Ansprüche 1 bis 3, dadurch gekennzeichnet, daß das Bewegungsspiel der Stützelemente (3) in dem Isolierprofil (4) durch an dem Isolierprofil (4) angeformte Kragen (6) begrenzt ist und daß die Kragen U-förmig sind.

5. Stütz- und Haltevorrichtung nach einem der Ansprüche 1 bis 4, dadurch gekennzeichnet, daß die Befestigungselemente (11) innerhalb des Isolierprofils (4) durchgeführt und durch dieses isoliert sind.

6. Stütz- und Haltevorrichtung nach einem der Ansprüche 1 bis 5, dadurch gekennzeichnet, daß das Befestigungselement (11) bündig in dem Isolierprofil eingebettet ist.

7. Stütz- und Haltevorrichtung nach einem der Ansprüche 1 bis 6, dadurch gekennzeichnet, daß die Stützelemente (3) hochgezogene Stützbereiche (13) aufweisen.

8. Stütz- und Haltevorrichtung nach einem der Ansprüche 1 bis 7, dadurch gekennzeichnet, daß die Stützelemente (3) aus Keramik bestehen.

## Claims

1. Support and holding device (1) for busbars (2) in busbar distributors with flat bars arranged in parallel and at a distance with regard to one another, while support elements (3) are clamped between the busbars (2) and while the support elements (3) are held by at least one insulating profile (4) and are guided in a displaceable way in this latter profile (4), **wherein** two support elements (3) are associated each with one insulating profile (4) and located between the busbars (2) and at the beginning and at the end of the package of busbars (2) and support elements (3) and wherein the insulating profile (4) is essentially U-shaped and wherein the support elements (3) present a recess (5), adapted to the insulating profile (4), and are fixed to the latter by a snap-in action.

2. Support and holding device as claimed in claim 1, wherein the package formed by busbars (2) and support elements (3) is clamped by means of two U-shaped profiles (10) with fixing elements (11) and counter supports (12).

3. Support and holding device as claimed in claim 1 or 2, wherein the support and holding device (1) is designed for the fixing of busbars (2) covered with a coating made of duroplastic material.

4. Support and holding device as claimed in any claim 1 through 3, wherein the free motion of the support elements (3) within the insulating profile (4) is limited by means of necks (6) formed at the insulating profile (4) and wherein the necks are U-shaped.

5. Support and holding device as claimed in any claim 1 through 4, wherein the fixing elements (11) pass through the inside of the insulating profile (4) and are insulated by means of this latter profile.

6. Support and holding device as claimed in any claim 1 through 5, wherein the fixing element (11) is flush mounted into the insulating profile.

7. Support and holding device as claimed in any claim 1 through 6, wherein the support elements (3) present raised support sections (13).

8. Support and holding device as claimed in any claim 1 through 7, wherein the support elements (3) are made of ceramic material.

## Revendications

1. Dispositif de support et de maintien (1) pour barres conductrices (2) dans des canalisations préfabriquées à barres plates espacées parallèlement, où les éléments de support (3) sont serrés entre les barres conductrices (2) et où les éléments de support (3) sont maintenus par au moins un profil isolant (4), et sont guidés de manière mobile dans celui-ci (4); **caractérisé en ce que** sont disposés deux éléments de support (3) entre les barres conductrices (2) et au commencement ainsi qu'à l'extrémité de la rangée des barres conductrices (2) et éléments de support (3); lesdits éléments de support (3) étant rattachés chacun à un profil isolant (4); et en ce que le profil isolant (4) est essentiellement en forme d'U, et que les éléments de support (3) présentent un évidement (5) pour l'ajustage du profil isolant (4), sur lequel ils sont encliquetés.

2. Dispositif de support et de maintien selon la revendication 1, **caractérisé en ce que** la rangée de barres conductrices (2) et d'éléments de support (3) est maintenue bloquée au moyen de deux profils en U (10) avec éléments de fixation (11) et contre-rivets (12).

3. Dispositif de support et de maintien selon la revendication 1 ou 2, **caractérisé en ce que** le dispositif de support et de maintien (1) est défini pour la fixation d'une barre conductrice (2) couverte d'une couche de résine thermodurcissable.

4. Dispositif de support et de maintien selon l'une des revendications 1 à 3, **caractérisé en ce que** le jeu de mouvement des éléments de support (3) dans le profil isolant (4) est limité par des rebords (6) ajustés sur le profil isolant (4), et que ces rebords sont en forme d'U.

5. Dispositif de support et de maintien selon l'une des revendications 1 à 4, **caractérisé en ce que** les éléments de fixation (11) sont guidés à l'intérieur du profil isolant (4), et qu'ils sont isolés par celui-ci.

6. Dispositif de support et de maintien selon l'une des revendications 1 à 5, **caractérisé en ce que** l'élément de fixation (11) est inséré en affleurant le profil isolant.
